# EUROPEAN PATENT SPECIFICATION

(11) **EP 3 771 848 B1**
(45) Date of publication and mention of the grant of the patent: **11.09.2024**
(21) Application number: 19188898.1
(22) Date of filing: 29.07.2019
(51) Int. Cl.: F16G 13/06

(54) **A METHOD AND MACHINE FOR GREASING OF A TRACK CHAIN PIN-BUSHING ASSEMBLY**
VERFAHREN UND MASCHINE ZUM FETTEN EINER RAUPENKETTENSTECKHÜLSENANORDNUNG
PROCÉDÉ ET MACHINE POUR LE GRAISSAGE D'UN ENSEMBLE AXE-DOUILLE DE CHAÎNE DE CHENILLE

(43) Date of publication of application: 03.02.2021
(73) Proprietor: Berco S.p.A., 44034 Copparo FE (IT); thyssenkrupp AG, 45143 Essen (DE)
(72) Inventor: Luigi, Alessandro de, 44049 Vigarano Pieve (IT); Orioli, Marco, 44123 Ferrara (IT)
(74) Representative: Meissner Bolte Partnerschaft mbB

(56) References cited:
- JP-A- S61 192 945

## Description

### Background art

Chain driven systems are commonly used for transmitting mechanical power via a roller chain from one rotating component to another, or for moving a vehicle along the ground. Chain driven systems are common place amongst construction machinery, when a roller chain system allows for better traction in certain environments.

During the manufacture of chain-driven construction machinery, a number of the components assembled must be well lubricated during the assembly process such that the assembled components may fluidly move against one another. A lubricated system ensures that the machinery may operate in the most efficient manner. This is particularly true of track chains and their assemblies, in particular the assembly of a pin and bushings used to form the track chain. In such track chain assemblies it is necessary to lubricate the pin prior to inserting it into the central portion of a bushing, thus allowing the two components to slide against each other and the track chain, which has been lubricated, to have a fluid motion during operation.

Current lubrication methods and machinery for greasing track chains and their constituent component have two shortfalls which hinder the efficiency of the track chain as well as the durability and lifetime of the pin bushing assembly which forms part of the track chain. The first of these shortfalls is that current methods and systems for greasing the pin and bushing assembly do not guarantee an even distribution of the lubrication onto the pin and or bushing within the assembly. Since the grease/lubricant is not applied evenly to the pin, some regions of the pin may be left without sufficient lubrication, or in a worst case scenario, no lubrication. This uneven application of grease/lubrication applied to the pin results in premature wear of the pin bushing assembly and the system as a whole which in turn leads to failure in the field of the track chain assembly.

The second shortcoming that may arise in current systems is that the greasing of the pin may go beyond the desired limits and extend beyond the region of the pin which is to be press fit into the bushing. This excess greasing may compromise the linking of the track chain in particular by causing disengagement of the link pin from the link which would cause the track chain to undesirably open and thus fail in the field.

It is thus an objective of the present invention to increase the durability and longevity of the track chain assembly, in particular the pin and bushing assembly while also reducing failure of the track chain assembly within the field due to insufficient or excessive greasing/lubrication of parts of the pin bushing assembly.

JP S61 192945 A relates to a lubricating method of a chain wherein before a pin is assembled into a chain, the pin applies to its semiperipheral part a lubricating film, containing a solid lubricant, to be formed, or a bush of chain assembly member applies a lubricating film, containing a solid lubricant, to be formed. Next, the pin and the bush, placing in their load contact side the lubricating film, are assembled into a chain. And lubrication is performed between the pin and the bush by running-in operation for familiarizing the assembled chain.

### Summary

The present invention is aimed at solving the technical problem(s) outlined above. The invention relates to a method for greasing and assembling a track chain pin and bushing. The method comprises the following steps in the mentioned order: 1.) inserting a pin into a first self-centering gripper, 2.) inserting a bushing into a second self-centering gripper opposite the first self-centering gripper, 3.) applying grease to the pin, 4.) evenly spreading the grease on the surface of the pin which is to be inserted into the bushing, 5.) using a plate, and inserting the pin into the bushing.

The invention also relates to an automated greasing machine for greasing a pin and assembling a pin and bushing. The automated greasing machine comprises a first self-centering gripper for holding a pin, a second self-centering gripper for holding a bushing positioned opposite, in a horizontal direction, the first self-centering gripper, a grease dispenser for applying grease to a pin held by the first self-centering gripper, a plate attached to the machine configured to be movable towards the pin and spread the grease. The first and/or second self-centering grippers are configured to be moveable in a horizontal direction such that a pin held by the first self-centering gripper may be inserted into the bushing.

### Brief description of drawings

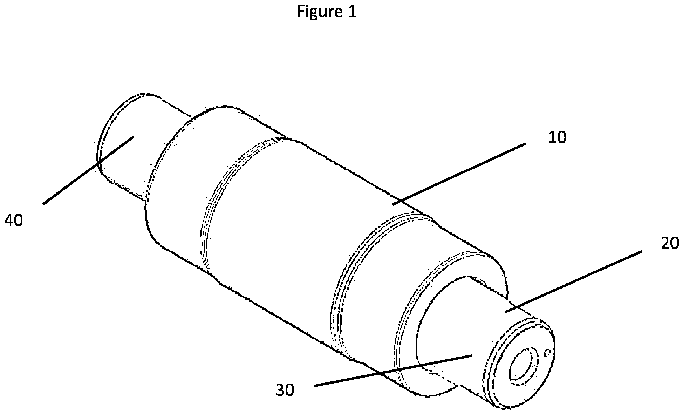

Figure 1 displays an assembled track chain pin and bushing as assembled according to the method/by the automated greasing machine, of the present invention.

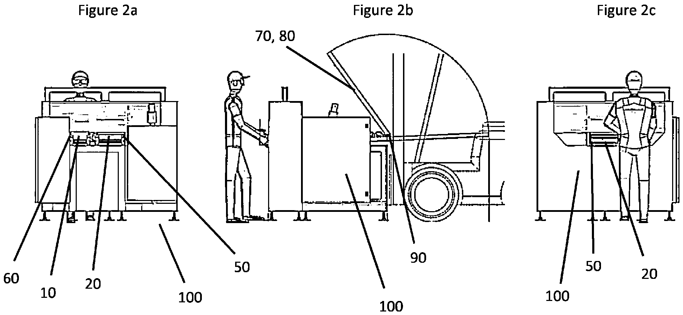

Figures 2a-2c display multiple views of an automated greasing machine according to an embodiment of the present invention.

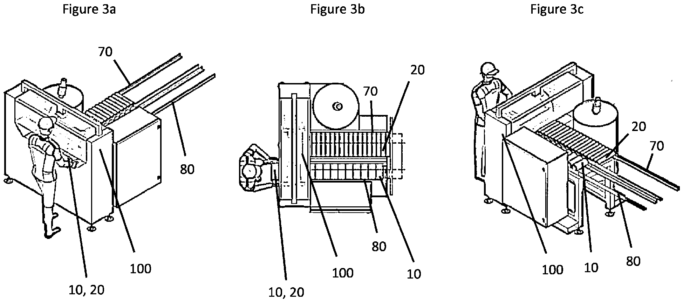

Figures 3a-3c display multiple views of an automated greasing machine according to an embodiment of the present invention.

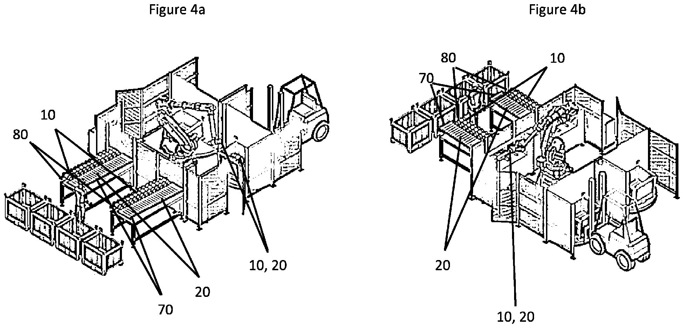

Figures 4a-4b display multiple views of a centralized area for use with an automated greasing machine according to an embodiment of the present invention.

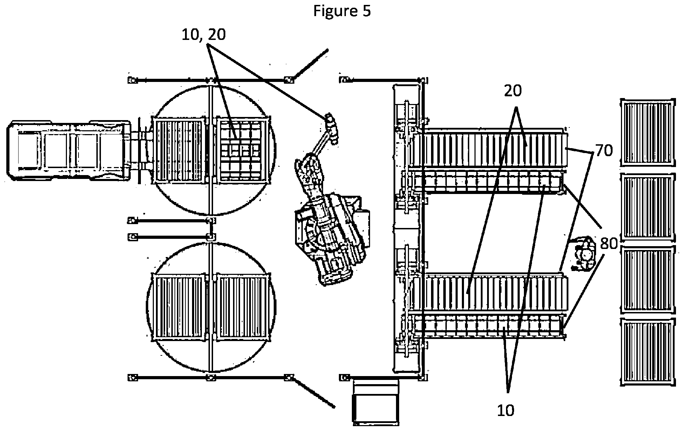

Figure 5 displays multiple views of a centralized area for use with an automated greasing machine according to an embodiment of the present invention.

### Description of preferred embodiments

Firstly, an automated greasing machine (100) according to an embodiment of the present invention shall be described.

The automated greasing machine (100) comprises a first self-centering gripper. Said self-centering gripper is designed to ensure that the pin (20) is held in place during the upcoming greasing and inserting steps. The self-centering gripper may preferably be a three-finger self-centering gripper. The self-centering gripper holds the pin (20) at one end such that the pin (20) protrudes directly outwards from the centre of the self-centering gripper. This alignment allows the pin (20) to rotate about an axis extending longitudinally through the pin (20).

The automated greasing machine (100) also comprises a second self-centering gripper (60) for holding a bushing (10). The second self-centering gripper (60) may be identical to the first self-centering gripper or may be adapted somewhat for holding a bushing (10). The self-centering gripper is positioned opposite the first self-centering gripper in a horizontal direction such that the longitudinal axis of the first self-centering gripper and the second self-centering gripper (60) are in the same horizontal plane.

The first and second self-centering grippers (50, 60) may be positioned such that the centre axis of the first self-centering gripper is the same axis as the centre axis of the second self-centering gripper (60).

The positioning of both the first and second self-centering grippers (50, 60) mean that a pin (20) held in the first self-centering gripper may be inserted into a bushing (10) in the second self-centering gripper (60) when the two self-centering grippers (50, 60) are brought towards each other.

A pin (20) held by the first self-centering gripper may be comprise three sections, a first end portion (30), a second end portion (40), and a centre portion. The centre portion may be considered to be the made up of the middle part of the pin (20) wherein the length of the centre portion is the same length as the bushing (10).

The automated greasing machine (100) also comprises a lubricant dispenser, for example a grease dispenser. Said grease dispenser can be used to dispense grease onto the centre portion of the pin (20) held by the first self-centering gripper (50). Said grease dispenser may be positioned above the first self-centering gripper (50) such that grease may flow downwards under the force of gravity and onto the pin (20) held by the first self-centering gripper (50).

The automated greasing machine (100) also comprises a plate connected to the main body of the automated greasing machine (100) and is configured to be moveable towards a pin (20) held by the first self-centering gripper (50). Said plate may be rectangular or comprise at least one flat edge extending longitudinally parallel to a pin (20) when a pin (20) is inserted in the first self-centering gripper (50). Said flat edge may be the same length as the centre portion of the pin (20).

The plate may be attached to a mechanical arm which is either machine or hand operated thereby bringing the plate closer towards a pin (20) held in the first self-centering gripper (50) such that the longitudinal edge of the plate may contact grease on the pin (20).

The plate is used to spread the grease around the outer surface of the centre portion of the pin (20) such that an even thickness of grease is found at all points around the centre portion surface of the pin (20). The plate may be made, for example, of Teflon or nylon.

The spreading of grease around the pin (20) via the plate may be computer operated or mechanically operated by a user.

The first self-centering gripper (50) and/or the second self-centering gripper (60) may be configured to be rotatable. The first self-centering gripper (50) may rotate such that a held pin (20) also rotates and grease applied to the pin (20) may be spread by the plate being held in contact with the grease as the pin (20) is rotated.

The first and second self-centering grippers (50, 60) are configured to be moveable in a horizontal direction such that a pin (20) held by the first self-centering gripper (50) may be inserted into a bushing (10) held by the second self-centering gripper (60). During insertion of the pin (20) into the bushing (10), the first self-centering gripper (50) may rotate.

Furthermore, the automated greasing machine (100) may comprise a first roller conveyor belt (70) for moving the receiving pins (20) closer to the first self-centering gripper (50). Likewise, the automated greasing machine (100) may also comprise a second roller conveyor belt (80) for moving bushings (10) closer to the second self-centering gripper (60).

The automated greasing machine (100) may also comprise attachment means which are capable of positioning the pin (20) into the first self-centering gripper (50), and the bushing (10) into a second self-centering gripper (60).

The first and/or second roller conveyer belts (70, 80) may be hinged at a centre point (90).

The automated greasing machine (100) may also comprise a blade for cleaning the portions of the bushing end. Said blade may be attached to an arm of the automated greasing machine (100) and is moveable such that it can contact both ends of the bushing (10) when the pin bushing assembly is held by a self-centering gripper.

Next, a method for greasing and assembling a track chain pin and bushing according to an embodiment of the present invention is outlined.

Firstly, the method comprises an inserting step wherein a pin (20) is inserted into a first self-centering gripper (50) and held in place. The insertion of said pin (20) may be an automatic step performed by a preprogrammable piece of machinery. Likewise, the insertion step may be a manual insertion step wherein the pin (20) is inserted into the first self-centering gripper (50) by hand or by a user with an adapted tool.

Next, the method comprises a second inserting step wherein a bushing (10) is inserted into a second self-centering gripper (60), wherein the second self-centering gripper (60) is positioned opposite the first self-centering gripper (50). Similar to the first insertion step, the second insertion step may be automatic and performed by a preprogrammed piece of machinery or may be performed by hand.

Next, grease is applied to the outer surface of a centre portion of the pin (20) held in the first self-centering gripper (50). Said greasing step may be performed by a user applying grease to the top surface of the pin (20) or may comprise the user spreading grease around the outer circumference of the pin (20).

Next, the grease on the surface of the pin (20) is spread evenly around the outer circumference of the pin (20) using a plate with at least one straight edge as long as the centre portion of the pin (20). Said spreading step ensures that an even thickness of grease is distributed around the circumference of the centre portion of the pin (20).

The greasing and spreading steps may be repeated until the grease thickness around the circumference of the centre portion of the pin (20) is above a set threshold thickness. Said threshold thickness may be the maximum thickness which would allow the pin (20) to be inserted into a bushing (10) without a buildup of excess grease on an end surface of the bushing (10).

Finally, there is a third inserting step wherein the greased pin (20) is inserted into a bushing (10). Said insertion step may comprise the first and second self-centering grippers (50, 60) being brought towards each other such that the pin (20) extends into and through the bushing (10).

The third insertion step, may involve heating of the bushing (10) and/or the pin (20). Said heating step may allow the insertion of the pin (20) into the bushing (10) to occur more easily.

The pin (20) may be rotated during one or more of the applying, spreading, and third insertion steps. Said rotation may allow for an easier spreading of grease around the outer surface of the pin (20) and/or a smoother insertion of the pin (20) into the bushing (10).

There may be an additional step wherein after the third insertion step a cleaning step is performed. This cleaning step involves using a blade to scrape off any excess grease from the bushing end surface. The bushing end surface may be the end surface which the pin (20) was inserted into. Any excess grease cleaned from the finished pin bushing component may be recovered and reused.

Many of the steps outlined herein may be performed manually by an operator or may be performed by the greasing machine itself, when instructed to perform certain steps via a user interface such as a touch panel. It will also be appreciated that the user/operator may perform instructions on a step-by-step basis, or the system may be fully automated and thus only a start instruction needs to be input.

The advantageous effects of the outlined invention allow for an even coating of grease to surround the pin (20) thereby preventing insufficient or excessive greasing of the pin bushing assembly, which can prevent premature wear disengagement of certain features, in the pin bushing assembly. This therefore increases the durability and longevity of the track chain assembly whilst also reducing failure of the track chain assembly within the field.

### Reference numerals

| | |
|---|---|
| Bushing | 10 |
| Pin | 20 |
| First end portion | 30 |
| Second end portion | 40 |
| First self-centering gripper | 50 |
| Second self-centering gripper | 60 |
| First roller conveyor belt | 70 |
| Second roller conveyor belt | 80 |
| Center point hinge | 90 |
| Automated greasing machine | 100 |

## Claims

1. A method for greasing and assembling a track chain pin and bushing comprising the following steps in the mentioned order:
1.) inserting a pin (20) into a first self centering gripper (50),
2.) inserting a bushing (10) into a second self centering gripper (60) opposite the first self centering gripper (50),
3.) applying grease to the pin (20),
4.) evenly spreading the grease on the surface of the pin (20) which is to be inserted into the bushing (10), using a plate,
5.) inserting the pin (20) into the bushing (10).

2. The method of claim 1, wherein the pin (20) is rotated whilst the grease is applied to the pin (20) and/or whilst the grease is spread on the surface of the pin (20) and/or whilst the pin (20) is inserted into the bushing (10).

3. The method of claims 1 or 2, wherein grease is continually applied and spread until the thickness of the grease on the pin (20) is above a set threshold thickness.

4. The method of claim 3, wherein the threshold is the maximum thickness which would allow the pin (20) to be inserted into the bushing (10).

5. The method of any one of the preceding claims, comprising the further step of, cleaning the portions of the bushing end surface using a blade.

6. The method of any one of the preceding claims, wherein the plate is attached to an automated machine or is held in place by the operator.

7. The method of any one of the preceding claims, wherein as the pin (20) is inserted into the bushing (10), the bushing (10) and/or the pin (20) is heated.

8. An automated greasing machine (100) for greasing a pin (20) and assembling a pin (20) and bushing (10) comprising,
a first self-centering gripper (50) for holding a pin (20),
a second self-centering gripper (60) for holding a bushing (10) positioned opposite, in a horizontal direction, the first self-centering gripper (50),
a grease dispenser for applying grease to a pin (20) held by the first self-centering gripper (50),
a plate attached to the machine (100) configured to be movable towards the pin (20) and spread the grease, and
wherein the first and/or second self-centering grippers (50, 60) are configured to be moveable in a horizontal direction such that a pin (20) held by the first self-centering gripper (50) may be inserted into the bushing (10).

9. The automated greasing machine (100) of claim 8, further comprising:
a first roller conveyor belt (70) for receiving pins (20),
a second roller conveyor belt (80) for receiving bushings (10)
a blade for cleaning the portions of the bushing end.

10. The automated greasing machine (100) of any one of claims 8 or 9, wherein the first and/or second roller conveyor belts (70, 80) are hinged at a center point (90).

11. The automated greasing machine (100) of any one of claims 8 to 10, wherein the grease dispenser is configured to only apply grease to the portions of the pin (20) which are inserted into the bushing (10).

12. The automated greasing machine (100) of any one of claims 8 to 11, wherein the first and/or second self-centering grippers (50, 60) are configured to be rotatable.

13. The automated greasing machine (100) of claim 12, wherein the pin (20) may rotate when held by the first self-centering gripper (50).

## Patentansprüche

1. Verfahren zum Schmieren und Zusammenbauen eines Raupenkettenbolzens und einer -buchse, das die folgenden Schritte in der angegebenen Reihenfolge umfasst:
1.) Einsetzen eines Bolzens (20) in eine erste selbstzentrierende Greifvorrichtung (50),
2.) Einsetzen einer Buchse (10) in eine zweite selbstzentrierende Greifvorrichtung (60) gegenüber der ersten selbstzentrierenden Greifvorrichtung (50),
3.) Aufbringen von Schmiermittel auf den Bolzen (20),
4.) gleichmäßiges Verstreichen des Schmiermittels auf der Oberfläche des Bolzens (20), der in die Buchse (10) eingesetzt werden soll, unter Verwendung einer Platte,
5.) Einsetzen des Bolzens (20) in die Buchse (10).

2. Verfahren nach Anspruch 1, wobei der Bolzen (20) gedreht wird, während das Schmiermittel auf den Bolzen (20) aufgebracht wird, und/oder, während das Schmiermittel auf der Oberfläche des Bolzens (20) verstrichen wird, und/oder, während der Bolzen (20) in die Buchse (10) eingesetzt wird.

3. Verfahren nach Anspruch 1 oder 2, wobei das Schmiermittel kontinuierlich aufgebracht und verstrichen wird, bis die Dicke des Schmiermittels auf dem Bolzen (20) oberhalb einer festgesetzten Schwellendicke liegt.

4. Verfahren nach Anspruch 3, wobei der Schwellenwert die maximale Dicke ist, die es ermöglichen würde, dass der Bolzen (20) in die Buchse (10) eingesetzt wird.

5. Verfahren nach einem der vorhergehenden Ansprüche, das den weiteren Schritt des Reinigens der Abschnitte der Buchsenendfläche unter Verwendung einer Klinge umfasst.

6. Verfahren nach einem der vorhergehenden Ansprüche, wobei die Platte an einer automatisierten Maschine befestigt ist oder durch den Bediener an ihrem Platz gehalten wird.

7. Verfahren nach einem der vorhergehenden Ansprüche, wobei, wenn der Bolzen (20) in die Buchse (10) eingesetzt wird, die Buchse (10) und/oder der Bolzen (20) erhitzt werden.

8. Automatisierte Schmierungsmaschine (100) zum Schmieren eines Bolzens (20) und Zusammenbauen eines Bolzens (20) und einer Buchse (10), wobei die Maschine Folgendes umfasst:
eine erste selbstzentrierende Greifvorrichtung (50) zum Halten eines Bolzens (20),
eine zweite selbstzentrierende Greifvorrichtung (60) zum Halten einer Buchse (10), die, in einer horizontalen Richtung, gegenüber der ersten selbstzentrierenden Greifvorrichtung (50) angeordnet ist,
eine Schmiermittel-Abgabevorrichtung zum Aufbringen von Schmiermittel auf einen Bolzen (20), der durch die erste selbstzentrierende Greifvorrichtung (50) gehalten wird,
eine Platte, die an der Maschine (100) befestigt ist, wobei sie dafür konfiguriert ist, zu dem Bolzen (20) hin beweglich zu sein und das Schmiermittel zu verstreichen, und
wobei die erste und/oder die zweite selbstzentrierende Greifvorrichtung (50, 60) dafür konfiguriert sind, derart in einer horizontalen Richtung beweglich zu sein, dass ein Bolzen (20), der durch die erste selbstzentrierende Greifvorrichtung (50) gehalten wird, in die Buchse (10) eingesetzt werden kann.

9. Automatisierte Schmierungsmaschine (100) nach Anspruch 8, die ferner Folgendes umfasst:
ein erstes Rollenförderband (70) zum Aufnehmen von Bolzen (20),
ein zweites Rollenförderband (80) zum Aufnehmen von Buchsen (10),
eine Klinge zum Reinigen der Abschnitte des Buchsenendes.

10. Automatisierte Schmierungsmaschine (100) nach einem der Ansprüche 8 oder 9, wobei das erste und/oder das zweite Rollenförderband (70, 80) an einem Mittelpunkt (90) gelenkig gelagert sind.

11. Automatisierte Schmierungsmaschine (100) nach einem der Ansprüche 8 bis 10, wobei die Schmiermittel-Abgabevorrichtung dafür konfiguriert ist, Schmiermittel nur auf diejenigen Abschnitte des Bolzens (20) aufzubringen, die in die Buchse (10) eingesetzt werden.

12. Automatisierte Schmierungsmaschine (100) nach einem der Ansprüche 8 bis 11, wobei die erste und/oder die zweite selbstzentrierende Greifvorrichtung (50, 60) dafür konfiguriert sind, drehbar zu sein.

13. Automatisierte Schmierungsmaschine (100) nach Anspruch 12, wobei sich der Bolzen (20) drehen kann, wenn er durch die erste selbstzentrierende Greifvorrichtung (50) gehalten wird.

## Revendications

1. Procédé pour le graissage et l'assemblage d'une broche et d'une douille de chaîne de chenille, comprenant les étapes suivantes dans l'ordre mentionné :
1) insertion d'une broche (20) dans un premier préhenseur à centrage automatique (50),
2) insertion d'une douille (10) dans un deuxième préhenseur à centrage automatique (60) opposé au premier préhenseur à centrage automatique (50),
3) application de graisse sur la broche (20),
4) répartition homogène de la graisse sur la surface de la broche (20) destinée à être insérée dans la douille (10), à l'aide d'une plaque,
5) insertion de la broche (20) dans la douille (10).

2. Procédé selon la revendication 1, dans lequel la broche (20) est mise en rotation pendant que la graisse est appliquée sur la broche (20) et/ou pendant que la graisse est répartie sur la surface de la broche (20) et/ou pendant que la broche (20) est insérée dans la douille (10).

3. Procédé selon les revendications 1 ou 2, dans lequel de la graisse est appliquée continuellement et répartie jusqu'à ce que l'épaisseur de la graisse sur la broche (20) soit supérieure à une épaisseur seuil définie.

4. Procédé selon la revendication 3, dans lequel le seuil est l'épaisseur maximale permettant l'insertion de la broche (20) dans la douille (10).

5. Procédé selon l'une quelconque des revendications précédentes, comprenant l'étape supplémentaire de nettoyage des parties de la surface d'extrémité de douille à l'aide d'une lame.

6. Procédé selon l'une quelconque des revendications précédentes, dans lequel la plaque est fixée à une machine automatisée ou maintenue en place par l'opérateur.

7. Procédé selon l'une quelconque des revendications précédentes, dans lequel la douille (10) et/ou la broche (20) sont chauffées pendant l'insertion de la broche (20) dans la douille (10).

8. Machine de graissage automatisée (100) pour le graissage d'une broche (20) et l'assemblage d'une broche (20) et d'une douille (10) comprenant
un premier préhenseur à centrage automatique (50) destiné à maintenir une broche (20),
un deuxième préhenseur à centrage automatique (60) destiné à maintenir une douille (10) positionnée à l'opposé du premier préhenseur à centrage automatique (50) dans une direction horizontale,
un distributeur de graisse destiné à appliquer de la graisse sur une broche (20) maintenue par le premier préhenseur à centrage automatique (50),
une plaque fixée à la machine (100) configurée pour être déplaçable vers la broche (20) et répartir la graisse, et
dans laquelle le premier et/ou le deuxième préhenseur à centrage automatique (50, 60) sont configurés pour être déplaçables dans une direction horizontale de manière à ce qu'une broche (20) maintenue par le premier préhenseur à centrage automatique (50) puisse être insérée dans la douille (10).

9. Machine de graissage automatisée (100) selon la revendication 8, comprenant en outre :
une première courroie de convoyeur à rouleaux (70) destinée à recevoir des broches (20),
une deuxième courroie de convoyeur à rouleaux (80) destinée à recevoir des douilles (10)
une lame destinée à nettoyer les parties de l'extrémité de douille.

10. Machine de graissage automatisée (100) selon l'une quelconque des revendications 8 ou 9,
dans laquelle la première et/ou la deuxième courroie de convoyeur à rouleaux (70, 80) sont articulées au niveau d'un point central (90).

11. Machine de graissage automatisée (100) selon l'une quelconque des revendications 8 à 10,
dans laquelle le distributeur de graisse est configuré pour appliquer de la graisse seulement sur les parties de la broche (20) insérées dans la douille (10).

12. Machine de graissage automatisée (100) selon l'une quelconque des revendications 8 à 11,
dans laquelle le premier et/ou le deuxième préhenseur à centrage automatique (50, 60) sont configurés pour être rotatifs.

13. Machine de graissage automatisée (100) selon la revendication 12, dans laquelle la broche (20) peut tourner lorsqu'elle est maintenue par le premier préhenseur à centrage automatique (50).
